# EUROPEAN PATENT APPLICATION

(11) **EP 1 225 713 A1**
(43) Date of publication of application: **24.07.2002**
(21) Application number: 02075249.9
(22) Date of filing: 21.01.2002
(51) Int. Cl.: H04B 10/10, B64D 43/00, B60R 16/00

(54) **Free space communication system for controlling remote vehicle components**

(30) Priority: 23.01.2001 NL 1017177
(71) Applicant: Fokker Elmo B.V., 4631 RP Hoogerheide (NL)
(72) Inventor: Wedzinga, Gosse, 1064 NS Amsterdam (NL); Scholten, Willem, 4708 CA Roosendaal (NL)
(74) Representative: Jorritsma, Ruurd

(57) **Abstract**

A communication system for controlling a vehicle component comprises at least one control panel for manual input of a control command, as well as at least one conductor for transmitting a signal, generated as a result of the control command, to the vehicle component. Optical free space means are also provided for transmitting the control command to the conductor. Consequently the control panels can be easily replaced. The positioning can also be varied, without having to change cable lengths.

## Description

The invention relates to a communication system for controlling a vehicle component, comprising at least one control panel for manual input of a control command, as well as at least one conductor for transmitting a signal, generated as a result of the control command, to the vehicle component.

Communication systems of this type are used in a wide variety of fields, in particular in aviation. In aircraft it is customary to use control panels in the cockpit, which control panels are provided with push buttons, switches and the like for controlling various functions. The control command is transmitted by means of, for example, an electric cable to the vehicle component to be controlled, such as a control unit and the like.

On the other hand, displays or display devices are installed in the cockpit, by means of which the effect of a control command can be displayed, the status of certain systems can be monitored and the like. For this purpose the signals are transmitted in the reverse direction, that is to say from the aircraft component to the display device in the cockpit.

The cables are attached to the control panels and to the display devices by means of connectors. Especially in the case of use in aviation where weight plays an important role, the cables are so sized that the connectors can just be connected, usually without an excessive length of cable. The consequence of this is that each cable has to be precisely matched to the location of the control panel concerned. This can mean that for the development of various cockpit configurations or modifications of existing cockpit configurations in aircraft it is necessary to develop and to install customised cabling. Consequently, it is fairly problematical to change the control panels if the size and location thereof are different. The cable harness frequently then does not have the desired length.

The aim of the invention is to provide a communication system of the type described above with which this problem does not arise. Said aim is achieved in that optical means functioning with an unrestricted or free beam are provided for the transmission of the control command to the conductor.

Since no fixed connections between control cables and control panels are used in the communication system according to the invention, the tolerance with regard to the connection thereof is appreciably greater. The optical means which are used to transmit the control command to the cables allow various positionings of the control panels without the control cables having to be adapted for this purpose.

Furthermore, as already mentioned, at least one display device can be provided for displaying a signal originating from a vehicle component, for example an aircraft component. In this case the control panel, the display device and the conductor can each comprise an optical transmitter/receiver. The control panel and the display device can be accommodated in a single housing. In this case the combined control panel/display device and the connector can each comprise an optical transmitter/receiver. Preferably, each optical transmitter emits a divergent beam of infrared light. Furthermore, there can be at least two receivers within the field of at least one transmitter. Assuming that the signals from neighbouring transmitters/receivers do not interfere (the communication protocol must prevent this), it is optionally possible to use a smaller number of transmitters/receivers by this means. Said number could also be reduced by using quasi-diffuse light emission.

Preferably, the control panels and display devices are in a console, through which console the conductors extend. The transmitters/receivers are on the sides of the control panels which face one another, with the control panels and display devices on one side and the conductors on the other side.

The conductors can be electrical cables; optical fibres are an alternative.

To increase the reliability of operation of the optical means, the interior space in the console is shielded from incident light. Furthermore, in this connection the interior walls of the console can be coated with a non-reflective coating.

The interior space of the console is sealed off with regard to the ingress of undesired items, dust, insects and the like.

The invention will now be explained in more detail with reference to an illustrative embodiment shown in the figures.

Fig. 1 shows a side view of the communication system according to the invention.

Fig. 2 shows a plan view of the application of said communication system in an aircraft cockpit.

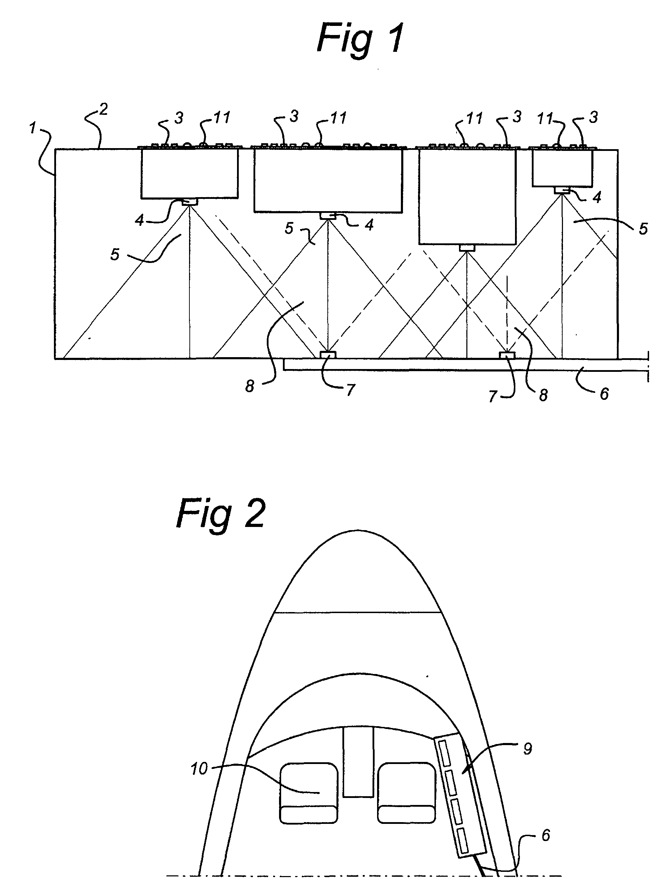

The communication system shown in Fig. 1 comprises a console 1, having a top 2 in which a number of control panels 3 and display devices 11 are arranged. The control panels 3 can have push buttons or switches, as is customary in the instrument panel of an aircraft. The display devices can have screens, digital displays, lamps and the like.

On the side facing towards the interior of the console 1, each display panel 3 has a transmitter/receiver 4 which emits a divergent light beam 5, for example infrared light.

At the bottom of the console 1 there are cables 6, which are likewise provided with transmitters/receivers 7 which emit a divergent light beam 8.

When a control command is entered in the control panel 3 the relevant transmitter/receiver 4 of said control panel 3 emits a light signal that is received by one or more of the transmitters/receivers 7 which are connected to the cables 6. These transmitters/receivers 7 on the cables 6 then generate a signal that is further transmitted via said cables 6. The signal concerned can be an electrical signal, but optical signals are also possible.

The advantage of the communication system according to the invention is that the position of the cables 6 can be varied both laterally and in height with respect to the control panels 3 without the command structure being lost. The cables 6 consequently do not have to be precisely matched to the location and size of the control panels 3, such that replacement of the control panels 3 can be carried out easily without the cable length and the like having to be adjusted. Furthermore, the control panels can be positioned in a desired location.

The transmitters/receivers on the cables 6 can be in the range of the divergent beams 5 from several transmitters/receivers 4 of the control panels 3. As a result it is also possible to transmit the commands in a fail-safe manner, insofar as, of course, the signals from the control panels do not interfere with one another. A twin-channel interface can be used in connection with airworthiness requirements.

In Fig. 2 it is shown that the communication system 9 according to the invention is particularly suitable for application in the cockpit of an aircraft, alongside the pilot's seat 10, but also against the top of the cockpit.

Although reference has been made in the above description to control panels, the communication system according to the invention can also be used with display devices.

## Claims

1. Communication system for controlling a vehicle component, comprising at least one control panel (3) for manual input of a control command, as well as at least one conductor (6) for transmitting a signal, generated as a result of the control command, to the vehicle component, **characterised in that** optical means (4, 7) functioning with an unrestricted or free beam are provided for the transmission of the control command to the conductor (6).

2. Communication system according to Claim 1, wherein the panel (3) has an optical transmitter (4) and the conductor (6) has an optical receiver (7) which is located in the field of the optical transmitter (4).

3. Communication system according to Claim 1 or 2, wherein at least one display device (11) is provided for displaying a signal originating from a vehicle component, such as an aircraft component.

4. Communication system according to Claim 3, wherein the control panel (3), the display device (11) and the conductor (6) each have an optical transmitter/receiver (4, 7) and each receiver (4, 7) is in the field of the respective transmitter (4, 7).

5. Communication system according to Claim 3, wherein the control panel (3), and the display device (11) are accommodated in a common housing and have an optical transmitter/receiver (4), and the conductor has an optical transmitter/receiver (7) and each receiver is in the field of the respective transmitter.

6. Communication system according to Claim 2, 3, 4 or 5, wherein each optical transmitter (4, 7) emits a divergent beam (5, 8).

7. Communication system according to Claim 6, wherein each optical transmitter emits infrared light.

8. Communication system according to one of Claims 2 - 7, wherein at least two receivers (4, 7) are in the field of at least one transmitter (4, 7).

9. Communication system according to one of the preceding claims, wherein each control panel (3) and/or each display device (11) is in a console (1), through which console (1) each conductor (6) extends opposite said control panel (3) and/or said display device (11).

10. Communication system according to Claim 4 or 5, wherein the transmitters/receivers (4, 7) are on the sides of each control panel (3) which face one another, with each control panel and each display device on one side and each conductor (6) on the other side.

11. Communication system according to Claim 9 or 10, wherein the interior space in the console (1) is shielded from incident light.

12. Communication system according to Claim 9, 10 or 11, wherein the interior walls of the console (1) are coated with a non-reflective coating.

13. Communication system according to one of Claims 9 - 11, wherein the interior space of the console (1) is sealed off with regard to the ingress of undesired items, dust, insects and the like.

14. Communication system according to one of the preceding claims, wherein the number of transmitters differs from the number of receivers.

15. Communication system, such as for the control of a vehicle component, and/or the monitoring or read-out of a status of a vehicle, comprising at least one control panel (3) for the input of a command, or a display device (11), as well as at least one conductor (6) for transmitting a signal generated as a result of the control command or the monitoring activity or read-out activity, **characterised in that** optical means (4, 7) are provided, operating with an unrestricted or free beam for the transmission of the signal between the conductor (6) and the control panel (3) or the display device (11).
